Europäisches Patentamt

European Patent Office

Office européen des brevets

(11) Publication number: **0 110 451**
**A1**

## (12) EUROPEAN PATENT APPLICATION

(21) Application number: **83201540.8**

(22) Date of filing: **26.10.83**

(51) Int. Cl.³: **C 09 D 3/64,** C 09 D 3/58, C 09 D 5/00

(30) Priority: **29.10.82 NL 8204207**

(43) Date of publication of application: **13.06.84**
**Bulletin 84/24**

(84) Designated Contracting States: **AT BE CH DE FR GB IT LI LU NL SE**

(71) Applicant: **DSM RESINS BV, Ceintuurbaan 5, NL-8022 AW Zwolle (NL)**

(72) Inventor: **Belder, Eimbert Gerrit, Anjerweg 16, NL-8042 CS Zwolle (NL)**
Inventor: **van der Linde, Robert, Kuyerhuislaan 10, NL-8024 PD Zwolle (NL)**
Inventor: **Schippers, Jan, Vordensebeek 12, NL-8033 DE Zwolle (NL)**

(74) Representative: **Leherte, Georges Maurice Lucien Marie et al, Octrooibureau DSM P.O.Box 9, NL-6160 MA Geleen (NL)**

(54) **Powder coating.**

(57) A powder coating of which the binding agent comprises a homogeneous mixture of an epoxy resin based on Bisphenol A and epichlorohydrin and a polyester containing carboxyl groups, and contains a polyester of which the acid number is between 10 and 25 mg KOH/g, the hydroxyl number is smaller than 15 mg KOH/g, the theoretical number-average molecular weight is between 4,000 and 12,500 and the glass transition temperature is between 40 and 85°C, as well as the epoxy resin mentioned, in amounts by weight such that 0.8 to 1.2 equivalent epoxy is present per equivalent carboxyl.

EP 0 110 451 A1

## POWDER COATING

The application relates to a powder coating of which the binding agent consists of a homogeneous mixture that comprises an epoxy resin based on Bisphenol A and epichlorohydrin and a polyester containing carboxyl groups.

Powder coatings of this kind are already known, inter alia from Dutch OPI 7604421, Examples VII and VIII. In use, these powder coatings present one or several of the following problems:

1. The relatively high content of epoxy resin that is necessary as cross-linking agent requires a polyester having a relatively high glass transition temperature, as a result of which limitations in the freedom of formulation of the polyester occur.

2. The flow of the polyester-epoxy combination is not optimal ("orange-peel effect").

3. The cured coating layer does not have good exterior durability and it yellows.

The present invention now provides powder coatings which are improved with respect to one or several of the aforementioned problems. The powder coatings according to the invention contain a polyester having a combination of characteristics, namely an acid number between 10 and 25 mg KOH/g, a hydroxyl number of a maximum of 15 mg KOH/g, a theoretical number-average molecular weight (according to Patton) between 4,500 and 12,500 and a glass transition temperature (Tg) between 40 and 85°C.

The relative amount of epoxy resin that is used per equivalent carboxyl in the polyester is between 0.8 and 1.2, preferably between 0.9 and 1.1 epoxy equivalent.

Preferably the acid number of the polyester (resin) is between 12 and 23 mg KOH/g, the hydroxyl number is below 5 mg KOH/g, the theoretical number-average molecular weight ($\overline{M}n$) is between 5,000 and 10,000 and the Tg is between 45 and 70°C.

The average carboxyl functionality of the polyester is situated in the range of 2 to 3, preferably between 2.2 and 2.8 and more particularly between 2.2 and 2.5.

Conspicuous is especially the relatively high molecular weight of the polyester and it is quite surprising that in spite of this high molecular weight a better flow of the powder coating is obtained. Moreover, because of the high molecular weight, the polyester resin contains relatively little low molecular material, as a result of which the powder stability improves. The greater resistance to yellowing, which the polyester-epoxy binding agent systems according to the invention possess, makes these systems particularly suitable as coating layer for metallic ceiling lamellae, lighting fixtures and household articles.

The polyesters containing carboxyl groups, which are used according to the invention, may be prepared, in manners which are known per se, from substantially aromatic polycarboxylic acids, such as phthalic acid, isophthalic acid, terephthalic acid, benzene-1,2,4-carboxylic acid, pyromellitic acid, trimesic acid, 3,6-dichlorophthalic acid, tetrachlorophthalic acid, as well as, in as far as they are obtainable, from the anhydrides, acid chlorides or lower alkyl esters thereof. Mostly the carboxylic acid component consists for at least 50, preferably at least 70 mol.% of aromatic dicarboxylic acids, particularly isophthalic acid and/or terephthalic acid.

Further, especially aliphatic diols may be used, such as ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-[bis-(4-hydroxycyclohexyl)]-propane, 1,4-dimethylolcyclohexane, diethylene glycol, dipropylene glycol and 2,2-bis-[4-(2-hydroxylethoxy)]-phenylpropane and smaller amounts of polyols, such as glycerol, hexanetriol, pentaerythritol, sorbitol, trimethylolethane, trimethylolpropane and tris-(2-hydroxyethyl)-isocyanurate. Also, instead of diols and polyols, epoxy compounds may be used. Preferably the alcohol component contains at least 50 mol.% neopentyl glycol and/or propylene glycol.

Beside these, as polycarboxylic acids, cycloaliphatic and/or acyclic polycarboxylic acids may be used, such as, for example, tetrahydrophthalic acid, hexahydro-endomethylenetetrahydrophthalic acid, azelaic acid, sebacic acid, decanedicarboxylic acid, dimeric fatty acid, adipic acid, succinic acid and maleic acid, in amounts up to at most 30 mol.%, preferably to a maximum of 20 mol.% of the total amount of carboxylic acids. Also hydroxycarboxylic acids and/or possibly lactones may be used, e.g. 12-hydroxystearic acid, epsilon-caprolactone, hydroxypivalic acid ester of neopentyl glycol (esterdiol 204). Monocarboxylic acids, such as benzoic acid, tert.-butylbenzoic acid, hexahydrobenzoic acid and saturated aliphatic monocarboxylic acids may also be added in minor amounts during the preparation.

The polyesters are prepared in manners known per se, by esterification or interesterification, possibly in the presence of usual catalysts such as e.g. dibutyl-tin oxide or tetrabutyl titanate, whereby, through a suitable choice of the cooking conditions and of the COOH/OH ratio, end products are obtained of which the acid number lies between 10 and 25, preferably between 12 and 23. The polyesters preferably have practically no more free hydroxyl groups, i.e. the hydroxyl number is smaller than 15, preferably smaller than 5 mg KOH/g. For optimal adjustment of the glass transition temperature and the viscosity, it is desirable to use up to 15 mol.% of a compound having 4 or more methylene groups optionally substituted with lower alkyl groups (methyl or ethyl). For example, adipic acid, hexanediol-1,6 or dipropylene glycol is used as such.

As cross-linking agent, preferably an epoxy resin based on Bisphenol A and epichlorohydrin is used, i.e. the diglycidyl ether of Bisphenol A and higher addition products thereof. Coming into consideration as such are diverse commercially obtainable epoxy resins, such as e.g. Epikote resins of Shell, Araldite resins of CIBA and DER resins of Dow Chem. Comp. As a rule, these resins have average molecular weights between 300 and 4,000 and epoxy equivalent weights between 150 and 2,000.

The amount of epoxy resin that is used in the binding agent of the polyester resin is dependent on the acid number and on the epoxy equivalent (EEW) of the epoxy resin with which the polyester is combined, and lies between 0.8 and 1.2, preferably between 0.9 and 1.1 equivalent epoxy per equivalent carboxyl. In the case of Epikote 1001 (EEW 480) this means that between 6.4 and 20 wt.% epoxy resin and consequently between 93.6 and 80 wt.% polyester are used.

The above-mentioned mixture of epoxy resin and polyester is homogeneously mixed, this taking place mostly in the smelt, preferably in an extruder. This takes place after the usual additives, such as flowing aids, curing accelerators, pigments, etc., have been mixed in. Thereafter the extrudate is ground and sieved, whereafter the fraction having a particle size below 90 micrometer is applied by means of an electrostatic spraying apparatus and cured in a stoving oven at temperatures between 160 and 200°C for 10 to 30 minutes. The coating layer thus obtained exhibits an excellent combination of gloss, flow and mechanical properties, as well as an exceptionally good resistance to yellowing, as also appears from the following examples. In consequence of the low epoxy resin content, the exterior durability is considerably improved with respect to the powder coating systems based on polester/epoxy resin known up to now.

A. Preparation of the polyester resin

## EXAMPLE 1A

A three-litre reaction vessel, equipped with a thermometer, a stirrer and a distillation apparatus, was filled with the following materials: 17 g trimethylolpropane, 1,506 g terephthalic acid, 1,033 g neopentyl glycol, 58 g 1,4-cyclohexanedimethylol and 71 g hexanediol-1,6.

Thereafter, with stirring, while a light stream of nitrogen was led over the reaction mixture, the temperature was increased to 200°C, at which water formed; the temperature was gradually increased further to a maximum of 250°C and the water was distilled off. After 453 ml water had been collected, the acid number of the ester was 13.7 mg KOH/g. Subsequently 355 g isophthalic acid was added and further esterified to acid number 19.8 mg KOH/g. The last part of this process was carried out under reduced pressure.

The theoretical number-average molecular weight ($\overline{M}n$) of the acidic polyester was 6,500, the glass transition temperature (Tg) was 58°C, the hydroxyl number was smaller than 5 mg KOH/g and the viscosity was 700 dPa.s at 165°C (viscosity measured with an Emila rotation viscosimeter).

EXAMPLES 2A - 8A

Following the procedure described in Example 1A, polyester resins according to the invention were prepared of which the composition, acid number, hydroxyl number, Tg and $\overline{M}n$ are given in Table 1.

B. Preparation of the powder coating

EXAMPLE 1B

492 g of the granulated polyester of Example 1A was dry-mixed with 108 g epoxy resin (DER 662, ex Dow), 300 g titanium dioxide pigment (ex Kronos, Type Cl 310), 9 g Resiflow PV-5 (a polyacrylate flowing aid, 66% active, remainder probably silica, ex Worlée), 4.5 g benzoin and 2.0 g tetramethylammonium bromide, and subsequently introduced into an extruder (Buss made, Type PR 46). The extrudate was cooled, ground and sieved, the sieve fraction (smaller than 90 micrometer) being collected and used as powder coating. This powder coating was electrostatically sprayed onto steel panels which had been degreased beforehand with trichloroethane. For this, a Gema made, Type HP 720, electrostatic spraying apparatus was employed. The panels sprayed with powder coating were then put in an oven and cured at 220°C for 20 minutes. Thereafter the following properties were judged:

- 7 -                    0110451

- Gloss (Gardner 60°): 92
- Mechanical properties (Reverse Impact):
  greater than 11 kg/cm$^2$ = greater than 160 psi
- Yellowing resistance: good
- Flow: excellent (10)


## EXAMPLES 2B - 8B


In the same manner as in Example 1B, powder coatings were prepared starting from the polyester resins according to Example 2A - 8A. The compositions and the test results of these powder coatings are given in Table 2.

Finally, it is also observed that the exterior durability of the test panel according to Example 8B, measured with an Atlas Weather-O-Meter [ASTM-G 23-69 (4.7)], corresponded after 20 cycles with a gloss of 50% of the starting value. This is considered to be an attractive improvement with respect to known systems, in which the gloss had already decreased to 50% of the starting value after 12 cycles.

## TABLE 1

### Composition and properties of the polyesters

| Composition (g) | 2A | 3A | 4A | 5A | 6A | 7A | 8A |
|---|---|---|---|---|---|---|---|
| trimethylolpropane | 17 | 17 | 17 | 12 | 16 | 16 | 6 |
| terephthalic acid | 1681 | 1636 | 1693 | 1500 | 1605 | 1525 | 1623 |
| neopentyl glycol | 869 | 862 | 984 | 1009 | 1079 | 1112 | 1104 |
| 1,4-cyclohexanedimethylol | 58 | 58 | | 53 | | | |
| hexanediol-1,6 | | 142 | | 108 | 84 | 62 | 72 |
| pentanediol-1,5 | 125 | | | | | | |
| diethylene glycol | 128 | 128 | | | | | |
| adipic acid | 29 | 29 | | | 83 | 152 | 89 |
| 12-hydroxystearic acid | | | 58 | | | | 30 |
| ethylene glycol | | | 97 | | | | |
| isophthalic acid | 153 | 187 | 151 | 319 | 113 | 193 | 75 |
| **Properties** | | | | | | | |
| acid no. (mg KOH/g) | 20.6 | 19.9 | 18.0 | 16.4 | 16.5 | 24.6 | 10.7 |
| $\underline{M}n$ | 6500 | 6500 | 6500 | 7000 | 9000 | 5000 | 12500 |
| glass transition temperature (°C) | 49 | 49 | 56 | 59 | 48 | 49 | 51.5 |
| hydroxyl no. (mg KOH/g) | below 5 | below 5 | below 5 | below 5 | below 5 | below 5 | below 5 |
| viscosity at 165°C (dPa.s) | 540 | 960 | 720 | 650 | 510 | 520 | 630 |
| carboxyl functionality | 2.31 | 2.32 | 2.32 | 2.25 | 2.41 | 2.23 | 2.23 |

## TABLE 2

Composition and properties of the powder coatings

| Composition (g) | 2B | 3B | 4B | 5B | 6B | 7B | 8B |
|---|---|---|---|---|---|---|---|
| polyester resin | 492 | 492 | 504 | 510 | 510 | 468 | 540 |
| epoxy resin * | 108 | 108 | 96 | 90 | 90 | 132 | 60 |
| pigment, $TiO_2$ (Cl-310, ex Kronos) | 300 | 300 | 300 | 300 | 300 | 300 | 300 |
| Resiflow PV-5 (ex Worlée) | 9 | 9 | 9 | 9 | 9 | 9 | 9 |
| benzoin | 4.5 | 4.5 | 4.5 | 4.5 | 4.5 | 4.5 | 4.5 |
| tetramethylammonium-bromide | 2.0 | 2.0 | 2.0 | 2.0 | 2.0 | 2.0 | 2.0 |
| **Properties** | | | | | | | |
| gloss (Gardner 60°) | 95 | 92 | 93 | 90 | 92 | 90 | 91 |
| mech. properties **; ($kg/cm^2$) | 11 | 11 | 11 | 11 | 11 | 11 | 9 |
| (psi) | 160 | 160 | 160 | 160 | 160 | 160 | 130 |
| flow *** | 10 | 9 | 9 | 10 | 10 | 10 | 10 |
| powder stability (28 days at 40°C) | good | good | good | good | good | good | good |

*) DER 662 (ex Dow Chemicals); EEW 575-700. **) Determined according to ASTM D 2794-69
***) Judged visually on a scale of 1-10, in which 1 = very bad and
10 = excellent

## CLAIMS

1.      A powder coating of which the binding agent comprises a homogeneous mixture of an epoxy resin based on Bisphenol A and epichlorohydrin and a polyester containing carboxyl groups, characterized in that this binding agent contains a polyester of which the acid number is between 10 and 25 mg KOH/g, the hydroxyl number is smaller than 15 mg KOH/g, the theoretical number-average molecular weight is between 4,000 and 12,500 and the glass transition temperature is between 40 and 85°C, as well as the epoxy resin mentioned, and in amounts by weight such that 0.8 to 1.2 equivalent epoxy is present per equivalent carboxyl.

2.      A powder coating according to claim 1, characterized in that 0.9 to 1.1 equivalent epoxy is present per equivalent carboxyl.

3.      A powder coating according to claim 1 or 2, characterized in that the acid number is between 12 and 23 mg KOH/g.

4.      A powder coating according to any one of the claims 1 to 3, characterized in that the hydroxyl number is 5 mg KOH/g at a maximum.

5.      A powder coating according to any one of the claims 1 to 4, characterized in that the theoretical number-average molecular weight is between 5,000 and 10,000.

6.      A powder coating according to any one of the claims 1 to 5, characterized in that the glass transition temperature of the polyester is between 45 and 70°C.

7.       A powder coating according to any one of the claims 1 to 6, characterized in that the average carboxyl functionality of the polyester is between 2 and 3 and preferably between 2.2 and 2.8.

8.       A powder coating according to any one of the claims 1 to 7, characterized in that the dicarboxylic acid mixture of the polyester consists for at least 50 and preferably for at least 70 mol.% of isophthalic acid and/or terephthalic acid.

9.       A powder coating according to any one of the claims 1 to 8, characterized in that the aliphatic diol mixture of the polyester consists for at least 50 mol.% of neopentyl glycol and/or propylene glycol.

10.      A powder coating according to any one of the claims 1 to 9, characterized in that the polyester contains a compound that has at least 4 optionally alkyl-substituted methylene groups in an amount of at most 15 mol.% of the polyester composition.

11.      A process for the electrostatic coating of substrate material with a powder coating and curing of the powder coating, characterized in that a powder coating according to any one of the claims 1 to 10 is used.

12.      A completely or partly coated substrate, characterized in that a powder coating according to any one of the claims 1 to 10 is used as coating material.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 255 553  (Y. MIZUMURA et al.)<br>* Column 12, claims * | 1-12 | C 09 D    3/64<br>C 09 D    3/58<br>C 09 D    5/00 |
| X | EP-A-0 008 262  (RHONE-POULENC)<br>* Page 12, claims * | 1-12 | |
| X | RESEARCH DISCLOSURE, no. 172, August 1978, page 6, abstract no. 17210<br>"Polyester  powder  coatings"  *<br>Whole abstract * | 1-12 | |

TECHNICAL FIELDS
SEARCHED (Int. Cl. 3)

C 09 D    3/00

The present search report has been drawn up for all claims

| Place of search<br>THE HAGUE | Date of completion of the search<br>08-02-1984 | Examiner<br>STIENON P.M.E. |
|---|---|---|

EPO Form 1503 03 82